(19) Europäisches Patentamt
European Patent Office
Office européen des brevets

(11) Veröffentlichungsnummer: **0 034 758**
**A1**

(12) **EUROPÄISCHE PATENTANMELDUNG**

(21) Anmeldenummer: 81100955.4

(22) Anmeldetag: 11.02.81

(51) Int. Cl.³: **C 08 F 8/22**
C 08 L 25/18, C 08 L 55/02

(30) Priorität: 21.02.80 DE 3006448

(43) Veröffentlichungstag der Anmeldung:
02.09.81 Patentblatt 81/35

(84) Benannte Vertragsstaaten:
DE FR GB IT NL

(71) Anmelder: BASF Aktiengesellschaft
Carl-Bosch-Strasse 38
D-6700 Ludwigshafen(DE)

(72) Erfinder: Lindenschmidt, Gerhard, Dr.
Buchenweg 11
D-6906 Leimen(DE)

(72) Erfinder: Schulte, Wolfgang, Dr.
Barbarossastrasse 9
D-6733 Hassloch(DE)

(72) Erfinder: Brandstetter, Franz, Dr.
Ritterbuechel 45
D-6730 Neustadt(DE)

(72) Erfinder: Naarmann, Herbert, Dr.
Haardtblick 15
D-6719 Wattenheim(DE)

(72) Erfinder: Penzien, Klaus, Dr.
Bensheimer Ring 18
D-6710 Frankenthal(DE)

(54) **Verfahren zur Herstellung von Mischungen aus bromierten Polystyrolen und bromierten aromatischen Verbindungen; Mischungen, erhalten nach diesem Verfahren sowie deren Verwendung.**

(57) Mischungen aus bromierten olimeren Polystyrolen, die einen Polymerisationsgrad von 3 bis 400 aufweisen, und niedermolekularen bromierten aromatischen Verbindungen vom Typ der Diphenyläther werden erhalten durch Polymerisation der unbromierten Ausgangsstoffe in einem Halogenkohlenwasserstoff als Lösungsmittel mit Hilfe von Lewis-Säure-Katalysatoren. Nach der Bromierung wird das Reaktionsgemisch mit Wasser extrahiert, Bromwasserstoff und Katalysator entfernt und das Lösungsmittel sowie flüchtige Anteile abgetrennt. Die Bromierung findet im Temperaturbereich von -30°C bis +130°C statt. Die Schmelzviskosität der Mischungen ist niedrig so daß diese besonders geeignet sind für die Einarbeitung in thermoplastische Kunststoffe zu deren Flammfestausrüstung.

EP 0 034 758 A1

COMPLETE DOCUMENT

Croydon Printing Company Ltd.

Verfahren zur Herstellung von Mischungen aus bromierten Polystyrolen und bromierten aromatischen Verbindungen; Mischungen, erhalten nach diesem Verfahren sowie deren Verwendung

Die vorliegende Erfindung betrifft ein Verfahren zur Herstellung von Mischungen aus bromierten aromatischen Verbindungen und bromierten Polystyrolen.

Die Herstellung bromierter Polystyrole ist bekannt. Es sei hierzu verwiesen auf:

| | |
|---|---|
| (1) | DE-PS 25 37 385 |
| (2) | DE-OS 26 51 435 |
| (3) | DE-OS 28 00 012 |
| (4) | DE-OS 28 00 013 |

In den Druckschriften (1) bis (4) sind Verfahren zur Bromierung von Polystyrolen unterschiedlichen Molekulargewichts beschrieben. Nach den bekannten Verfahren werden Polystyrole in Lösung bromiert und die dabei erhaltenen Bromierungsprodukte über die geschmolzene Phase aufgearbeitet. Je nach dem Bromgehalt und dem Molekulargewicht des verwendeten Polystyrols müssen zur Aufarbeitung der Schmelze höhere Temperaturen angewendet werden, was zu einer Farbvertiefung der Schmelze bzw. zu Wandbelägen oder zu Korrosion führen kann. Es bestand daher die Aufgabe, ein Verfahren zu finden, bei dem die beschriebenen Risiken weitgehend ausgeschaltet werden können.

Durch die vorliegende Erfindung wird die Aufgabe dadurch gelöst, daß man die Bromierung des Polystyrols in Gegenwart von bestimmten aromatischen Verbindungen vornimmt.

Die Erfindung betrifft daher ein Verfahren zur Herstellung von Mischungen aus bromierten Polystyrolen und bromierten aromatischen Verbindungen. Dieses Verfahren ist

Vo/BL

dadurch gekennzeichnet, daß man a) Polystyrole mit einem Polymerisationsgrad von 3 bis 400, die ggf olefinische Doppelbindungen enthalten können, in Gegenwart eines Halogenkohlenwasserstoffs als Lösungsmittel und 1 bis 40 Gew.%, bezogen auf Polystyrol, eines Lewis-Säure-Katalysators und b) zusätzlich von aromatischen Verbindungen der allgemeinen Formel

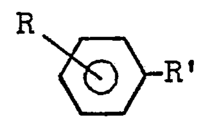

wobei für R = $CH_3$-, $C_2H_5$-, 2-Haloethyl-, Phenyl-, Phenoxi- und für

R' = H-, $CH_3$-, $C_2H_5$-, 2-Haloäthyl-, Phenyl-, Phenoxi- stehen, mit Brom bei Temperaturen von -30°C bis +130°C umsetzt, Bromwasserstoff und Lewis-Katalysator mit Wasser extrahiert und das Lösungsmittel sowie ggf. flüchtige Anteile aus der organischen Phase abtrennt.

Die nach dem erfindungsgemäßen Verfahren erhaltenen Produktmischungen weisen gegenüber den Produkten, die nicht unter Verwendung der aromatischen Verbindungen b) erhalten werden, eine erheblich niedrigere Schmelzviskosität auf. Die Produktschmelze kann daher bei niedrigeren Temperaturen verarbeitet und aufgearbeitet werden; dies entspricht einer Energieeinsparung und trägt zusätzlich zu einer geringeren Korrosion der Materialien der verwendeten Behälter, Reaktoren, Verarbeitungsmaschinen und dgl. bei. Im Bereich hoher Bromgehalte ist außerdem an den bromierten Produktmischungen eine Farbaufhellung und verbesserte Thermostabilität gegenüber den Produkten festzustellen, die nicht unter Zusatz der aromatischen Verbindungen (b) unter sonst gleichen Bedingungen gewonnen worden sind.

Die erheblich erniedrigte Viskosität der erfindungsgemäßen Produktschmelze erleichtert weiterhin die Einarbeitung von Füllstoffen, Synergisten, Pigmenten und dgl. Besonders vorteilhaft ist die Einarbeitung von bis zu 50 Gew.% $SnO_2$ oder $Sb_2O_3$, wobei die so erhaltenen Schmelzen beim Granulieren oder Vermahlen und beim Einsatz als Flammschutzmittel für Thermoplaste während der Konfektionierung nicht stauben.

Beim erfindungsgemäßen Verfahren können Polystyrole (a) mit Polymerisationsgraden von 3 bis 400, insbesondere mit solchen von 6 bis 200 verwendet werden. Die Herstellung derartiger Polystyrole ist hinreichend bekannt. In (2) ist bezüglich der Herstellung niedermolekularer Polystyrole durch thermische Polymerisation bereits auf die DE-OS 22 39 356 bzw. auf die britische Patentschrift 5 49 930 verwiesen. Die Herstellung niedermolekularer Polystyrole kann erfolgen in Abwesenheit von Initiatoren bei Temperaturen zwischen 200 und 400°C. Das Molekulargewicht der dabei entstehenden Oligomerisate ist dabei um so niedriger, je höher die Polymerisationstemperatur liegt. Die erhaltenen Oligomerisate weisen pro Makromolekül eine endständige Doppelbindung auf. Die so erhaltenen niedermolekularen Polystyrole können direkt für das erfindungsgemäße Verfahren eingesetzt werden. Es ist gleichermaßen möglich, die in den Oligomerisaten von der Synthese her noch vorhandenen olefinischen Doppelbindungen durch selektive Hydrierung vor der Bromierung zu beseitigen. Diese selektive Hydrierung erfolgt in an sich bekannter Weise mit Hilfe üblicher Hydrierkatalysatoren auf Basis von Metallen oder Metallsalzen der achten Gruppe des Periodensystems. Geeignete Hydrierverfahren sind in den US-PS 3 113 986 der DE-AS 12 22 260 oder der DE-OS 20 13 263 beschrieben. Bei dieser selektiven Hydrierung, die bei Wasserstoffdrücken zwischen 1 und 100 bar

und Temperaturen zwischen 25 und 155°C durchgeführt wird, werden die aromatischen Doppelbindungen nicht angegriffen; die Hydrierung der olefinischen Doppelbindungen soll vollständig erfolgen.

Als Polystyrole (a) für das erfindungsgemäße Verfahren kommen bevorzugt solche Produkte in Frage, die durch kationische Polymerisation hergestellt worden sind. Die Herstellung von niedermolekularen Polystyrolen durch kationische Polymerisation ist bekannt; wir verweisen hierzu auf (2). Die kationsiche Polymerisation des Styrols wird mit Hilfe von Lewis-Säure-Katalysatoren in an sich bekannter Art und Weise durchgeführt. Die eingesetzte Menge an Lewis-Säure-Katalysator richtet sich nach dem gewünschten Molekulargewicht und der erwünschten Molekulargewichtsverteilung des Polystyrols. Sie liegt im allgemeinen im Bereich von 1 bis 20 Gew.%, bezogen auf die das zu polymerisierende Styrol. Bezüglich der Einzelheiten sei auf die Ausführungen in (2) verweisen.

Für das erfindungsgemäße Verfahren geeignete Polystyrole mit den genannten Polymerisationsgraden können auch durch anionische Polymerisation hergestellt werden. Die anionische Polymerisation wird in Gegenwart von Lösungsmitteln und unter Zuhilfenahme von lithiumorganischer Verbindungen bei erhöhten Temperaturen durchgeführt. Von den genannten Polystyrolen werden bevorzugt die durch die kationische Polymerisation hergestellten Polystyrole angewendet, da diese besonders wirtschaftlich hergestellt werden können.

Das erfindungsgemäße Verfahren wird in Gegenwart eines Halogenkohlenwasserstoffs als Lösungsmittel durchgeführt. Als Halogenkohlenwasserstoffe im Sinne des erfindungsgemäßen Verfahrens kommen Dichlormethan, Trichlormethan, Tetrachlorkohlenstoff, 1,2-Dichloräthan, Tetrachloräthan

1,1,2-Trichloräthan, Dibromäthan, 1,2-Dibromäthan sowie die entsprechenden fluorierten oder gemischt halogenierten Kohlenwasserstoffe in Betracht. Von den genannten Kohlenwasserstoffen wird 1,2 Dichloräthan bevorzugt. Die Herstellung der Lösungen erfolgt nach wirtschaftlichen Gesichtspunkten, so daß in der Regel möglichst hochkonzentrierte Lösungen, bezogen auf Polystyrol, angewendet werden. Es werden daher 10 bis 60 gew.%ige Lösungen, bezogen auf die halogenierten Kohlenwasserstoffe, bromiert. Die erfindungsgemäß zu verwendenden halogenierten Kohlenwasserstoffe können jedoch auch teilweise bzw. ganz durch die aromatischen Verbindungen (b) ersetzt werden.

Als niedermolekulare aromatische Verbindung (b) kommen solche der allgemeinen Formel

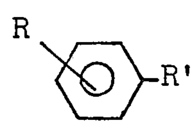

in Frage, .

in der
R und R' folgende Bedeutung haben:

R = Methyl-, Ethyl-, 2-Haloethyl-, Phenyl-, Phenoxi-;

R- = H, $CH_3$-, $C_2H_5$-, 2-Haloethyl-, Phenyl- und Phenoxi.

Von den Verbindungen, die unter diese Formel fallen, sind insbesondere die niedermolekularen aromatischen Verbindungen bevorzugt, die mindestens 2 aromatische Ringe enthalten, wie Diphenyle oder Diphenyläther. Verbindungen (b) mit nur einem aromatischen Kern, wie Toluol oder Äthylbenzol, zeigen ebenfalls die verfahrensspezifischen Verbesserungen; die Anwendbarkeit der aus den Schmelzen hergestellten Flammschutzmittel kann jedoch wegen der größeren Flüchtigkeit der niedermolekularen Bromderivate zu Nachteilen führen.

Die Zusatzmenge an aromatischen Verbindungen (b) kann, bezogen auf die beim erfindungsgemäßen Verfahren eingesetzten Polystyrole, in weiten Grenzen variieren. Ein Gehalt von 0,5 Gew.% an aromatischer Verbindung beim erfindungsgemäßen Verfahren bewirkt schon eine deutliche Viskositätserniedrigung der Produktschmelze. Die Obergrenze des Anteils der aromatischen Verbindung, bezogen auf Polystyrol, wird hauptsächlich von der beabsichtigten Verwendung her bestimmt. Die bromierten vollständig niedermolekularen aromatischen Verbindungen sind an sich bekannt und können auch alleine als Flammschutzmittel angewendet werden. Für die Flammschutzausrüstung von Thermoplasten sind Gehalte an aromatischer Verbindung (b), bezogen auf Polystyrol, von 0,2 bis zu etwa 60 Gew.% ausreichend.

Diese Angaben beziehen sich auf den Zustand vor der Bromierung.

Als Lewis-Säure-Katalysatoren im Sinne des erfindungsgemäßen Verfahrens kommen insbesondere 1 bis 40 Gew.%, bevorzugt 2 bis 20 Gew.%, bezogen auf die Summe aus Polystyrol und aromatischer Verbindung (b), Eisen, Eisen-(III)-chlorid, Eisentribromid, Aluminium, Aluminiumtrichlorid,

Aluminium-(III)-bromid, Bortrifluorid, Bortrifluoridätherate, Kupferbromid und dgl. in Betracht. Besonders vorteilhaft sind Eisen, Eisen-(III)-chlorid sowie Aluminium-(III)-chlorid.

Zur Durchführung des erfindungsgemäßen Verfahrens wird in der Regel in einer geeigneten Vorrichtung, die z.B. als Rührkessel ausgestaltet sein kann, niedermolekulares Polystyrol a) mit einem Polymerisationsgrad von 3 bis 400 in einem geeigneten Halogenkohlenwasserstoff als Lösungsmittel vorgelegt. Dazu wird die niedermolekulare aromatische Verbindung b) und einer der üblichen Bromierungskatalysatoren zugegeben. Der Zusatz von Katalysator kann entfallen, wenn kationische Polystyrole gemäß (2) eingesetzt werden. Die Mischung wird gerührt und bei Temperaturen im Bereich von -30 bis +130°C wird die vorgesehene bzw. berechnete Brommenge zulaufen gelassen. Nach Beendigung der Reaktion wird die Reaktionsmischung mit Wasser gegebenenfalls mehrmals extrahiert bis die wäßrige Phase neutral ist. Organische und wäßrige Phase werden getrennt. Die org. Phase wird bevorzugt durch Destillation von Lösungsmittelresten und geringen Mengen flüchtigen Anteilen befreit. Es verbleibt dabei eine Produktschmelze aus bromiertem Polystyrol und niedermolekularen Bromaromaten, die bei Raumtemperatur zu einem optisch klaren, sehr weitgehend amorphen Feststoff erstarrt.

Der Reaktionsmischung können vor dem Abdestillieren von Lösungsmitteln bzw. geringen Mengen an flüchtigen Anteilen 0,1 bis 3 Gew.%, bezogen auf den Feststoff, an üblichen Zusätzen wie Phosphiten, Phosphaten, Metallstearaten, Metallsulfaten, Metalloxiden, Organozinnverbindungen, Epoxiden, Antioxidantien oder Lichtschutzmitteln zugefügt werden. Weiterhin können in diesem Stadium der Aufbereitung des Reaktionsgemisches bereits die üblichen Syner-

gisten für das Flammschutzmittel, insbesondere $SnO_2$, $Fe_2O_3$, $Bi_2O_3$ und $Sb_2O_3$, zugesetzt werden.

Die nach dem erfindungsgemäßen Verfahren anfallenden Reaktionsgemische können im Prinzip auch aus bromierten Polystyrolen und bromierten aromatischen Verbindungen durch Mischen erhalten werden. Dies erfordert jedoch die gesonderte Bereitstellung von zwei bromierten Ausgangsstoffen mit unterschiedlichen Herstellungs- und Aufarbeitungsverfahren und ist damit unwirtschaftlich.

Die nach dem erfindungsgemäßen Verfahren erhaltenen Mischungen können für die Flammfestausrüstung von Thermoplasten angewendet werden. Als Thermoplaste für die Flammschutzausrüstung kommen dabei Polyäthylen, Polypropylen, Polystyrol, ABS-Polymerisate, Polyalkylenterephthalate und Polyamide in Betracht. Die Anwendung für die Flammfestausrüstung von ABS-Polymerisaten ist bevorzugt. Hierbei ist insbesondere die hohe Thermostabilität und das gute Fließverhalten des nach dem erfindungsgemäßen Verfahren erhaltenen Flammschutzmittelsystems hervorzuheben.

Die Einarbeitung des Flammschutzmittels sowie des eventuell anzuwendenden Synergisten, sowie der zusätzlich noch in Frage kommenden Zusatzstoffe in Thermoplaste können nach einem geeigneten und bekannten Mischverfahren z.B. in Extrudern, Knetern oder Walzen erfolgen.

Die nach dem erfindungsgemäßen Verfahren erhaltenen Mischungen können auch in Form eines Konzentrates in den gewünschten Thermoplasten eingemischt werden. Die Konzentrate, in Granulat- oder Pulverform, können in einen weiteren Teil des Thermoplasten eingearbeitet werden, um die gewünschte Zusammensetzung zu erzielen.

Aus den unter Verwendung der beim erfindungsgemäßen Verfahren anfallenden Reaktionsgemischen hergestellten Abmischungen mit Thermoplasten können durch Spritzgießen oder Strangpressen selbstverlöschende Formkörper oder Profile gewonnen werden.

Die Schmelzviskositäten wurden bei einer Temperatur von 190°C in einem Kapillarviskosimeter gemessen; bei niedrig viskosen Schmelzen wurde ein Balance-Rheometer als Rotationsviskosimeter (CBR Rotmethode) verwendet. Als Einheit wird die Pascalsekunde benutzt (Pa.s).

Zur Prüfung der mechanischen Eigenschaften von Thermoplasten, die nach dem erfindungsgemäßen Verfahren erhaltene Reaktionsmischungen eingearbeitet enthielten, wurden auf einer Spritzgußmaschine vom Typ Arburg Allrounder 200 bei 25°C Normkleinstäbe bzw. Rundscheiben von 2 mm Dicke und 60 mm Durchmesser hergestellt. Die Kerbschlagzähigkeit wurde nach DIN Norm 53 453, die Schädigungsarbeit beim Stoßversuch nach der DIN Norm 53 443 ermittelt.

Die Angaben des Polymerisationsgrades des Polystyrols basieren auf den mittleren Molekulargewichten (Zahlenmittel), die durch Messung des osmotischen Dampfdruckes bestimmt werden.

Die Flammschutzprüfung erfolgte im vertikalen Brandtest nach den Vorschriften der Underwriter Laboratories zwecks Einordnung in eine der Brandklassen 94 VE-0,94VE-1 oder 94 VE-2.

Zur Prüfung des Ausblühens des Flammschutzmittels wurden bei 230°C Preßplatten mit den Abmessungen 100 x 100 x 2 mm hergestellt. Die Aufheizzeit betrug 3 min, die Preßzeit bei 230°C betrug 3 min und die Abkühlzeit auf 23°C

dauerte 8 min. Die Preßplatten wurden bei 60°C in einen Trockenschrank gelagert. Nach bestimmten Zeiten wurde visuell kontrolliert, ob eine Oberflächenbelagsbildung vorliegt.

Die Erfindung wird nachstehend anhand von Beispielen (und anhand von Vergleichsversuchen) näher erläutert. Die in den Beispielen genannten Teile und Prozente beziehen sich, sofern nichts anderes vermerkt ist, auf das Gewicht.

Beispiele 1 bis 5

Zur Durchführung der Beispiele 1 bis 5 wurde im 2 l-Glaskolben eine wasserfreie Lösung von den in der Tabelle 1 genannten Mengen (in Gramm) an Polystyrol, hergestellt gemäß DE-OS 22 39 356 und GB-PS 5 49 930 mit einem Polymerisationsgrad von 11 und die ebenfalls in der Tabelle genannte Menge an Diphenyläther in (in Gramm) 600 ml 1,2-Dichloräthan verwendet. Zu dieser wasserfreien Lösung wurden 20 g $AlCl_3$ zugefügt und danach bei einer Temperatur zwischen 0 und 5°C 480 Gramm Brom unter Rühren in 3 Stunden zulaufen gelassen. Nach einer Nachreaktionszeit von 2 Stunden bei den genannten Temperaturen, gerechnet ab Beendigung des Bromzulaufs, wurde die Reaktionsmischung mit Wasser extrahiert; die Behandlung mit Wasser erfolgte solange, bis keine Bromid-ionen bzw. keine saure Reaktion in der wäßrigen Phase mehr festgestellt werden konnte. Nach Abtrennung der wäßrigen Phase wurden 6,8 Gramm Tridecylphosphit zu der Reaktionsmischung zugegeben und die Reaktionsmischung vom Lösungsmittel und anderen flüchtigen Anteilen befreit. Die Entgasung der Schmelze erfolgt bei 200°C und 3 mb in 15 Minuten. Es wurden 330 bis 345 Gramm, entsprechend 95 bis 99 % der Theorie, an bromiertem Reaktonsprodukt erhalten. Dieses Reaktionsprodukt erstarrte bei Raumtemperatur zu einer optisch klaren Schmelze,

die einen Bromgehalt von 69 % aufwies. Die Schmelzviskosität $\eta$ in [pa.s], gemessen bei 190°C, ist in der Tabelle 1 ebenfalls angegeben.

Tabelle 1

| Beispiel | Polystyrol | Diphenyläther | $\eta$ [Pa.s] |
|---|---|---|---|
| 1 | 104 | 0 | 80 |
| 2 | 97 | 7 | 30 |
| 3 | 90 | 14 | 13 |
| 4 | 78 | 26 | 2,4 |
| 5 | 52 | 52 | ca. 0,1 |

Beispiele 6 bis 11

Zu einer wasserfreien Mischung aus 4,1 Gramm $AlCl_3$ und 600 ml 1,2-Dichloräthan läßt man innerhalb von 1 Stunde die in der Tabelle 2 genannten Mengen Styrol (in Gramm) bei einer Temperatur von 5 bis 10°C unter Rühren zulaufen. Zur Vervollständigung der kationischen Polymerisation des Styrols, die zu einem Polystyrol des Polymerisationsgrades 15 führt, rührt man 30 Minuten bei 0° bis 5°C nach. Anschließend fügt man die in der Tabelle genannten Mengen an Diphenyläther (in Gramm) und zusätzlich erneut 15,9 Gramm $AlCl_3$ unter Rühren zu und führt die Bromierung und Aufarbeitung, wie in den vorangegangenen Beispielen 1 bis 5 beschrieben, durch. Man erhält 330 bis 345 Gramm, entsprechend 95 bis 99 % der Theorie, eines bromierten Reaktionsproduktes als gelbe bis braune, bei Raumtemperatur optisch klare, erstarrte Schmelze, die einen Bromgehalt von 69 % aufweist. Die bei 190°C gemessenen Schmelzviskositäten sind in der Tabelle 2 aufgeführt.

Tabelle 2

| Beispiel | Styrol | Diphenyläther | $\eta$ |
|---|---|---|---|
| 6 | 104 | 0 | 340 |
| 7 | 101 | 3 | 210 |
| 8 | 97 | 7 | 105 |
| 9 | 90 | 14 | 22 |
| 10 | 78 | 26 | 3 |
| 11 | 52 | 52 | ca. 0,1 |

Beispiel 12

Es wird, wie in Beispiel 3 beschrieben, verfahren, jedoch anstelle von Diphenyläther dieselbe Menge an Diphenyl verwendet. Es werden 335 Gramm Reaktionsprodukt mit einem Bromgehalt von 69 % erhalten; die Schmelzviskosität bei 190°C wurde zu 10 Pa.s bestimmt.

Beispiel 13

Es wird, wie in Beispiel 7 beschrieben, verfahren, jedoch wird anstelle von Diphenyläther dieselbe Menge an 1-Phenyl-2-bromäthan verwendet. Es werden 338 Gramm Bromierungsprodukt mit einem Bromgehalt von 69 % und einer bei 190°C gemessenen Schmelzviskosität von 205 Pa.s erhalten.

Beispiel 14

17,5 Gew.-Teile der nach Beispiel 11 hergestellten Flammschutzmittelmischung, 5 Gew.-Teile Antimontrioxid und 0,3 Gew.-Teile 4,4-Butyliden-bis(3'-methyl-6-tert.butylphenol) werden bei Raumtemperatur in einem Fluidmischer der Fa. Henschel vermengt. Das dabei erhaltene Gemisch

wird zusammen mit 77 Gew.-Teilen ABS, das 22 Gew.- Teile Polybutadien enthält, auf einem Extruder bei einer Temperatur von 230°C aufgeschmolzen, homogenisiert und anschließend granuliert. Aus dem erhaltenen Granulat wurden die für die nachstehenden Messungen erforderlichen Normkleinstäbe bzw. Rundscheiben hergestellt. Es wurden folgende Eigenschaften gemessen:

| | |
|---|---|
| Kerbschlagzähigkeit bei 23°C: | 14 $kJ/m^2$ |
| Schädigungsarbeit bei 23°C | 16 Nm |
| Brandklasse nach UL 94: | VE-0 |

Aus Granulatproben hergestellte Preßplatten zeigen nach 500 h bei 60°C keinerlei Oberflächenbelag.

Patentansprüche

1. Verfahren zur Herstellung von Mischungen aus bromierten Polystyrolen und bromierten aromatischen Verbindungen, dadurch gekennzeichnet, daß man a) Polystyrole mit einem Polymerisationsgrad von 3 bis 400, die ggf. olefinische Doppelbindungen enthalten können, in Gegenwart eines Halogenkohlenwasserstoffs als Lösungsmittel und 1 bis 40 Gew.%, bezogen auf Polystyrol, eines Lewis- Säure-Katalysators und b) zusätzlich von aromatischen Verbindungen der allgemeinen Formel

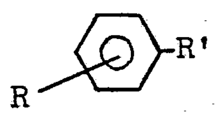

wobei für R = $CH_3$-, $C_2H_5$-, 2-Haloethyl-, Phenyl-, Phenoxi- und für

R' = H-, $CH_3$-, $C_2H_5$-, 2-Haloäthyl-, Phenyl-, Phenoxi- stehen,

mit Brom bei Temperaturen von -30°C bis +130°C umsetzt, Bromwasserstoff und Lewis-Säure-Katalysator mit Wasser extrahiert und das Lösungsmittel sowie ggf. flüchtige Anteile aus der organischen Phase abtrennt.

2. Mischungen erhalten gemäß Patentanspruch 1.

3. Verwendung der Mischungen gemäß Anspruch 1 für die Flammfestausrüstung von thermoplastischen Kunststoffen.

4. Verwendung der Mischungen gemäß Anspruch 1 für die Flammfestausrüstung von ABS-Polymerisaten.

*lb*

Europäisches Patentamt

**EUROPÄISCHER RECHERCHENBERICHT**

0034758

Nummer der Anmeldung
EP 81 10 0955

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 144 288 (J.D.MIANO)<br>* Anspruch 1; Spalte 1, Zeile 66; Spalte 2, Zeilen 11-28 *<br>& DE - A - 2 902 078<br>-- | 1-3 |
| | US - A - 2 676 946 (J.L.McCURDY, L.KIN)<br>* Anspruch 1; Spalte 1, Zeile 24; Spalte 3, Zeilen 45-48 *<br>---------- | 1-3 |

KLASSIFIKATION DER ANMELDUNG (Int. Cl.³)

C 08 F 8/22
C 08 L 25/18
C 08 L 55/02

RECHERCHIERTE SACHGEBIETE (Int. Cl.³)

C 08 F 8/20
C 08 F 8/22
C 08 L 25/18

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 8. April 1981 | PEETERS |